# EUROPEAN PATENT SPECIFICATION

(11) **EP 1 574 738 B1**
(45) Date of publication and mention of the grant of the patent: **18.06.2008**
(21) Application number: 04381007.6
(22) Date of filing: 24.03.2004
(51) Int. Cl.: F16D 59/02, B66D 5/12

(54) **Sheave braking system**
Bremssystem für eine Seilrolle
Système de freinage pour une poulie

(30) Priority: 23.02.2004 ES 200400428
(43) Date of publication of application: 14.09.2005
(73) Proprietor: MECAEL, S.L., 09197 Villalbilla de Burgos (ES)
(72) Inventor: Alonso Cubillo, Alejandro, 09197 Villalbilla de Burgos (Burgos) (ES)
(74) Representative: Esteban Perez-Serrano, Maria Isabel

(56) References cited:
- DE-B- 1 225 356
- GB-A- 1 345 918
- DATABASE WPI Section PQ, Week 197912 Derwent Publications Ltd., London, GB; Class Q38, AN 1979-C5991B XP002384037 & SU 604 785 A (PEIZAN V P) 24 April 1978 (1978-04-24)
- PATENT ABSTRACTS OF JAPAN vol. 2000, no. 17, 5 June 2001 (2001-06-05) & JP 06 239554 A (OTIS ELEVATOR CO), 30 August 1994 (1994-08-30)

## Description

### OBJECT OF THE INVENTION.

The object of the present invention is a sheave braking system, of among the regulation sheaves employed for the tensioning of cables, of use in railway systems or in any other environment wherein use is made of regulating the tensioning of cables by means of sheaves.

The present invention is characterised in the special configuration and design of the braking system which make the assembly a robust, effective system which acts quickly to achieve the rapid braking of the sheave, when a break occurs in the cable, avoiding a drop in the tension of the cables.

Therefore, the present invention lies within the ambit of the systems or means of braking sheaves and in a particular manner within those systems which use sheaves as a means of regulating the tension of the cables.

### BACKGROUND OF THE INVENTION.

Up until now the systems for braking sheaves are various, like for example those employed in the sheaves of elevator lifting systems, based on the use of some centrifugal masses which when a certain speed of rotation is surpassed, press against the interior part of the sheave itself, blocking it at that moment.

Other braking systems are based on the employment of some means of applying pressure operated by springs or hydraulically on both faces of the sheave, whenever a certain speed is surpassed.

On this occasion, a system is sought which brakes and blocks the sheave, which is actuated by the lateral/vertical displacement of the sheave.

None of the aforesaid braking systems can be worked by the lateral/vertical displacement of the sheave, due both to the construction and employment characteristics of the sheave in the traction system in which it is engaged.

Therefore, it is an objective of the present invention to develop a braking system which is actuated by the lateral/vertical displacement of the sheave.

### DESCRIPTION OF THE INVENTION.

The sheave braking system object of the invention, basically consists of some means or latches which retain the braking means while they are not activated.

The retention/release latches of the braking means are activated when the lateral/vertical displacement of the sheave takes place.

The sheave suffers a lateral/vertical displacement when the cable breaks. In the event of no action being taken on the sheave, the latter would begin to turn without control with the ensuing loss of tension in the cables. Like for example the cables used in the pantographs in the railways.

The latches are designed in such a way that in one position they retain the displaceable rods or tubes for braking, while in another position they allow the release of the latter impelled by some springs.

The braking system is practically symmetrical having the same means on both faces of the sheave, the braking being produced by a linear displacement of some braking means parallel to the axle of the sheave.

The braking system as has already been mentioned is actuated by the lateral/vertical displacement of the sheave, and not by a substantial increment in the rotation of the same.

### DESCRIPTION OF THE DRAWINGS.

The present descriptive specification is completed with a set of drawings, which illustrate but in no way restrict the preferred embodiment of the invention.

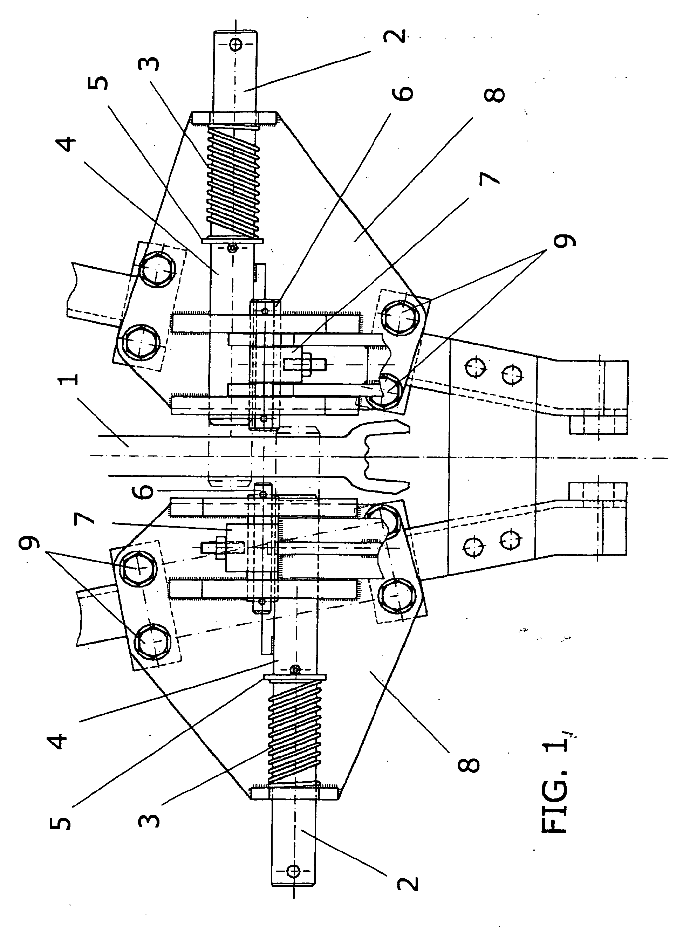

Figure 1 shows a representation of the sheave braking system object of the invention.

### DETAILED EXPLANATION OF EMBODIMENTS.

In the light of the figure, a preferred embodiment of the invention disclosed is described hereunder.

In figure 1, it can be observed how the sheave braking system is practically symmetrical, having the same means on both faces of the sheave, being mounted on some plates (8) secured by means of screws (9) to the rest of the structure.

The sheave (1) is housed in the intermediate space defined between both support plates (8) on which the braking means are mounted.

The braking means have a supporting bar (2) to which is coupled in a telescopic manner on the end nearest to the sheave a displaceable tube (4) which serves to brake the sheave (1).

Said moveable tube (4) for braking has on its end farthest removed from the sheave, an annular projection (5) by means of which the pressure of the spring (3) is transmitted.

The whole previous assembly is retained in a position prior to tripping, for which purpose on the external face of the moveable tube (4) for braking, a notch or rebate has been made in which is lodged the retention/release latch (6) the ends of which are those nearest to the sheave (1).

The retention/release latch (6) is secured to the support plate (8) by means of fastening bracket (7) which only allows it one degree of freedom, so that, when actuated by the sheave (1) in the event of lateral/vertical displacement of the latter, the latch (6) rotates and comes out of the lodging notch which the displaceable tube (4) has, whereby the latter is released and displaced by the action of the spring and presses against one of the faces of the sheave (1).

## Claims

1. Sheave braking system, **characterised in that** the system is activated by the lateral/vertical displacement of the sheave (1), activating a retention release latch (6) means which when displaced parallel to the axle of the sheave press on both faces thereof, the braking system being practically symmetrical on both faces of the sheave (1) and having with regard to each face a supporting plate (8) secured to the rest of a structure by means of some screws (9), there being on said plates (8) a support bar (2) on which on its end nearest to the sheave (1) a displaceable braking tube (4) is mounted telescopically, which on its part farthest from the sheave has an annular projection on which a spring (3) presses on said tube (4) which also has on its periphery a notch or rebate to house the retention/release latch (6) and impede the displacement thereof.

2. Sheave braking system, according to claim 1, **characterised in that** the release/retention latch (6) is secured on the support plate (8) by means of some fastening means (7) having a degree of freedom which allow it to come out of the notch implemented in the external part of the displaceable tube (4) for braking in the retention position thereof.

## Patentansprüche

1. Scheibenbremssystem, **dadurch gekennzeichnet, dass** das System durch die seitliche/vertikale Verschiebung der Scheibe (1) betätigt wird, wobei Mittel einer Rückhalte-/Auslöseklinke (6) aktiviert werden, die, wenn sie parallel zur Achse verschoben werden, auf beide Seiten derselben drücken, wobei das Bremssystem auf beiden Seiten der Scheibe (1) so gut wie symmetrisch ist und bezüglich jeder Seite über eine tragende Platte (8) verfügt, die mittels einiger Schrauben (9) mit dem Rest einer Struktur gesichert ist, wobei sich auf den besagten Platten (8) eine Trägerstange (2) befindet, auf der an deren Ende, das der Scheibe (1) am nächsten liegt, ein verschiebbares Bremsrohr (4) teleskopisch montiert ist, und welche an ihrem Teil, das am weitesten von der Scheibe entfernt ist, über einen ringförmigen Vorsprung verfügt, auf dem eine Feder (3) auf das besagte Rohr (4) drückt, das an seinem Umfang außerdem eine Aussparung oder Einkerbung besitzt, um die Rückhalte-/Auslöseklinke (6) aufzunehmen und die Verschiebung derselben zu verhindern.

2. Scheibenbremssystem nach Anspruch 1, **dadurch gekennzeichnet, dass** die Rückhalte-/Auslöseklinke (6) auf der Trägerplatte (8) mittels einiger Befestigungsmittel (7) gesichert ist, wobei diese einen Grad von Freiheit besitzt, welcher es ihr erlauben, aus der in dem äußeren Teil des verschiebbaren Rohrs (4) ausgeführten Aussparung zu kommen, um in der Rückhalteposition derselben zu bremsen.

## Revendications

1. Système de freinage à poulie, **caractérisé en ce que** le système est actionné par le déplacement latéral/vertical de la poulie (1), actionnant un dispositif de verrou de blocage/déblocage (6) qui lorsqu'il est déplacé parallèlement à l'axe de la poulie appuie sur les deux faces de celle-ci, le système de freinage étant pratiquement symétrique sur les deux faces de la poulie (1) et ayant pour chaque face une plaque de support (8) fixée au reste d'une structure à l'aide de quelques vis (9), étant présente sur lesdites plaques (8) une barre de support (2) sur laquelle à son extrémité la plus proche de la poulie (1) un tube de freinage déplaçable (4) est monté de manière télescopique, qui sur sa partie la plus éloignée de la poulie possède une projection annulaire sur laquelle un ressort (3) appuie sur ledit tube (4) qui a également sur sa périphérie un cran ou une feuillure pour loger le verrou de blocage/déblocage (6) et empêcher le déplacement de celui-ci.

2. Système de freinage à poulie, selon la revendication 1, **caractérisé en ce que** le verrou de déblocage/blocage (6) est fixé sur la plaque de support (8) au moyen de quelques éléments de fixation (7) ayant un degré de liberté qui lui permettent de sortir du cran prévu dans la partie externe du tube déplaçable (4) pour freiner dans la position de blocage de celui-ci.
